# EUROPEAN PATENT APPLICATION

(11) **EP 3 690 273 A1**
(43) Date of publication of application: **05.08.2020**
(21) Application number: 19214558.9
(22) Date of filing: 09.12.2019
(51) Int. Cl.: F16D 69/04, F16D 55/36, F16D 65/18, F16D 65/12

(54) **WEAR LINER WITH INTEGRATED TORQUE RIB**

(30) Priority: 29.01.2019 US 201916261149
(71) Applicant: Goodrich Corporation, Charlotte, NC 28217-4578 (US)
(72) Inventor: O'NEIL, Mathew R., Tipp City, OH 45371 (US); RIEBE, Gary C., Tipp City, OH 45371 (US); FIALA, Robert, Spokane, WA 99203 (US)
(74) Representative: Dehns

(57) **Abstract**

A friction disk (140) of a braking system includes a friction disk core (149) and a first wear liner (150). The friction disk core has a first surface and defines a first channel extending radially across the first surface, according to various embodiments. The first wear liner is coupled to the first surface of the friction disk core and includes a first wear surface and a first non-wear surface, according to various embodiments. The first wear liner further includes a first rib protruding from and extending radially across the first non-wear surface of the first wear liner, according to various embodiments. In an installed state, the first rib is received within the first channel, according to various embodiments.

## Description

### FIELD

The present disclosure relates to braking systems, and more specifically to wear liners for friction disks of aircraft breaking systems.

### BACKGROUND

Aircraft brake systems typically employ a series of friction disks forced into contact with each other to stop the aircraft. Friction disks splined to a non-rotating wheel axle are interspersed with friction disks splined to the rotating wheel. The friction disks withstand and dissipate the heat generated from contact between one another during braking. Current disk assemblies may comprise replaceable wear liners coupled to a reusable core. The liner may be attached to the core via a flange disposed at either an outer diameter of the liner for rotor assemblies or an inner diameter of the liner for stator assemblies. Attaching the liners via a flange can present torque transfer problems, particularly, when the liner is in a worn state.

### SUMMARY

In various embodiments, the present disclosure provides a friction disk comprising a friction disk core and a first wear liner. The friction disk core has a first surface and defines a first channel extending radially across the first surface, according to various embodiments. The first wear liner is coupled to the first surface of the friction disk core and includes a first wear surface and a first non-wear surface, according to various embodiments. The first wear liner further includes a first rib protruding from and extending radially across the first non-wear surface of the first wear liner, according to various embodiments. In an installed state, the first rib is received within the first channel, according to various embodiments.

The friction disk of claim 1 may further include a second wear liner, and the friction disk core may further include a second surface opposite the first surface. A second channel may be defined in and may extend radially across the second surface of the friction disk core. The second wear liner may include a second wear surface and a second non-wear surface, and the second ware liner may be coupled to the second surface of the friction disk core. Further, the second wear liner may include a second rib protruding from and extending radially across the second non-wear surface of the second wear liner such that, in the installed state, the second rib is received within the second channel.

In various embodiments, the friction disk further includes a fastener extending from the first wear liner to the second wear liner through the first rib, the first channel, the second channel, and the second rib. In various embodiments, a first head (e.g., a first end) of the fastener is recessed with respect to the first wear surface of the first wear liner and a second head (e.g., a second end) of the fastener opposite the first head is recessed with respect to the second wear surface of the second wear liner.

In various embodiments, sidewalls of the first rib are substantially perpendicular to the first non-wear surface. In various embodiments, the sidewalls of the first rib extend radially such that a circumferential dimension of the first rib decreases along a radially inward direction (e.g., from radially outward to radially inward). The friction disk core may be made from a first material, and the wear liner may be made from a second material different from the first material. The friction disk core may be a rotor core or a stator core.

Also disclosed herein, according to various embodiments, is a multi-disk brake system that includes a first friction disk and a second friction disk. The first friction disk includes a first friction disk core and a first wear liner, according to various embodiments. The first friction disk core comprises a first surface and defines a plurality of first channels extending radially across the first surface, according to various embodiments. The first wear liner may be coupled to the first surface of the friction disk core, and the first wear liner may include a first wear surface and a first non-wear surface. The first wear liner may also include a plurality of first ribs protruding from and extending radially across the first non-wear surface of the first wear liner, such that in an installed state the plurality of first ribs are respectively received within the plurality of first channels.

The second friction disk may have a configuration similar to the first friction disk. That is, the second friction disk may include a second friction disk core and a second wear liner, according to various embodiments. The second friction disk core comprises a second surface and defines a plurality of second channels extending radially across the second surface, according to various embodiments. The second wear liner may be coupled to the second surface of the friction disk core, and the second wear liner may include a second wear surface and a second non-wear surface. The second wear liner may also include a plurality of second ribs protruding from and extending radially across the second non-wear surface of the second wear liner, such that in an installed state the plurality of second ribs are respectively received within the plurality of second channels.

In various embodiments, the multi-disk brake system further includes a first fastener coupling the first wear liner to the first friction disk core, wherein a first head of the first fastener is recessed with respect to the first wear surface of the first wear liner. The fastener may extend through a first respective rib of the plurality of first ribs and a first channel of the plurality of first channels. In various embodiments, the plurality of first ribs and the plurality of first channels are circumferentially distributed around the first non-wear surface. Further, the first friction disk core may include a first portion radially outward from an outer circumferential surface of the first wear liner, and the second friction disk core may include a second portion radially inward from an inner circumferential surface of the second wear liner.

In various embodiments, the first friction disk comprises a rotor and the second friction disk comprises a stator, and the first wear liner and the second wear liner can be interchanged between the first friction disk core and the second friction disk core. In various embodiments, a usable material volume of the first wear liner is between 50% and 70% of a total material volume of the first wear liner in an unworn state.

Also disclosed herein, according to various embodiments, is a method of making a friction disk. The method may include forming a first channel in a first surface of a friction disk core and coupling a first wear liner to the friction disk core, with the first wear liner comprising a first rib protruding from a first non-wear surface of the first wear liner. Coupling the first wear liner to the friction disk core may include aligning the first rib with the first channel and inserting the first rib within the first channel.

In various embodiments, the method further includes forming a second channel in a second surface of the friction disk core opposite the first surface of the friction disk core and coupling a second wear liner to the friction disk core, the second wear liner comprising a second rib protruding from a second non-wear surface of the second wear liner, wherein coupling the second wear liner to the friction disk core comprises aligning the second rib with the second channel and inserting the second rib within the second channel. Coupling the first wear liner to the friction disk core and coupling the second wear liner to the friction disk core may include disposing a fastener through the first rib, the first channel, the second channel, and the second rib.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a cross-sectional view of a multi-disk brake system, in accordance with various embodiments;
FIG. 2A illustrates a perspective view of a friction disk having wear liners disposed on opposing surfaces of the friction disk core, according to various embodiments;
FIG. 2B illustrates a plan view of a wear liner disposed on a friction disk core, with fasteners coupling the wear liner to the friction disk core, according to various embodiments;
FIG. 2C illustrates a partial cross-sectional view of a friction disk having wear liners disposed on opposing surfaces of the friction disk core, according to various embodiments;
FIG. 3 illustrates a perspective view of a friction disk core define a plurality of channels for receiving a corresponding plurality of torque ribs of a wear liner, according to various embodiments;
FIG. 4A illustrates a perspective view of a wear liner showing a non-wear surface of the wear liner having a plurality of torque ribs, according to various embodiments;
FIG. 4B illustrates a perspective view of a wear liner showing a wear surface of the wear liner, according to various embodiments;
FIG. 4C illustrates a partial cross-sectional view of a wear liner, showing a counterbore opening for receiving a fastener therethrough, according to various embodiments; and
FIG. 5 is a schematic flow chart diagram of a method of making a friction disk, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the spirit and scope of the disclosure. Thus, the detailed description herein is presented for purposes of illustration only and not of limitation.

In the case of components that rotate about a common axis, a first component that is "radially outward" of a second component means that the first component is positioned at a greater distance away from the common axis than the second component. A first component that is "radially inward" of a second component means that the first component is positioned closer to the common axis than the second component. In the case of components that rotate circumferentially about a common axis, a first component that is radially inward of a second component rotates through a circumferentially shorter path than the second component. As used herein, "distal" refers to the direction outward, or generally, away from a reference component. As used herein, "proximal" and/or "proximate" refer to a direction inward, or generally, towards the reference component.

Disclosed herein, according to various embodiments, are wear liners for friction disks (e.g., rotors and stators) of a braking system. The friction disks may include a friction disk core with wear liners coupled to the friction disk core. As described in greater detail below, the wear liner may include a plurality of integrated torque ribs that protrude from a non-wear surface of the wear liner. The wear liners may be coupled to the friction disk core via a fastener and may be positioned to provide frictional contact with adjacent friction disks during braking. The wear liners may be used for rotor and stator friction disks. In other words, the wear liners may be compatible with both rotor cores and stators cores. The interchangeability of the wear liners may simplify the friction disk manufacturing process and/or increase output by reducing assembly time. Additionally, the integrated torque ribs may allow a greater portion of the wear liner to be utilized thereby reducing material waste.

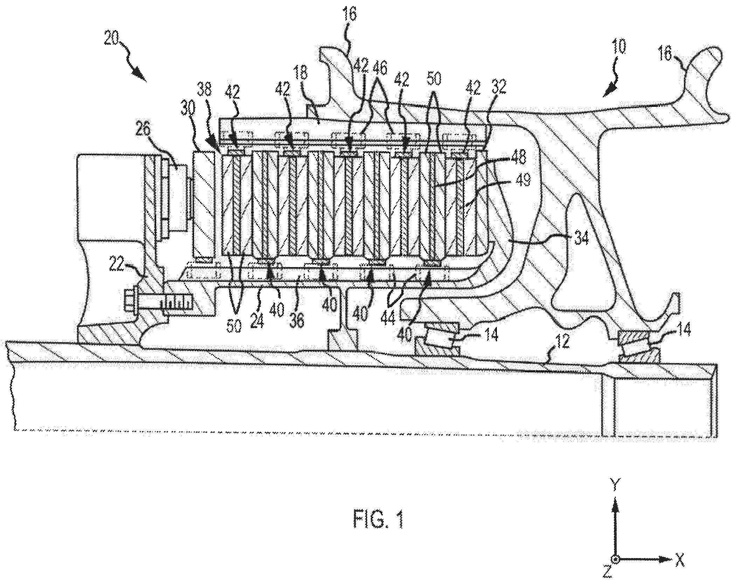

Referring to FIG. 1, a multi-disk brake system 20 is illustrated according to various embodiments. The system may include a wheel 10 supported for rotation around axle 12 by bearings 14. Axle 12 defines an axis of multi-disk brake system 20 and the various components thereof described herein, and any reference to the terms axis and axial may include an axis of rotation defined by axle 12 or a dimension parallel to such axis. Wheel 10 includes rims 16 for supporting a tire, and a series of axially extending rotor splines 18 (one shown). Rotation of wheel 10 is modulated by multi-disk brake system 20. Multi-disk brake system 20 includes torque flange 22, torque tube 24, a plurality of pistons 26 (one shown), pressure plate 30, and end plate 32. Torque tube 24 may be an elongated annular structure that includes reaction plate 34 and a series of axially extending stator splines 36 (one shown). Reaction plate 34 and stator splines 36 may be integral with torque tube 24, as shown in FIG. 1, or attached as separate components.

Multi-disk brake system 20 also includes a plurality of friction disks 38. Each friction disk 38 may comprise a friction disk core. The plurality of friction disks 38 includes at least one friction disk with a non-rotatable core, also known as a stator 40, and at least one friction disk with a rotatable core, also known as a rotor 42. Stators 40 and rotors 42 may be located adjacent to one another in multi-disk brake system 20, forming a plurality of adjacent stator-rotor pairs. Stators 40 may comprise a stator core 48 and wear liners 50. Rotors 42 may comprise a rotor core 49 and wear liners 50. Each friction disk 38 includes an attachment structure. In the embodiment of FIG. 1, each of the four stators 40 includes a plurality of stator lugs 44 at circumferentially spaced positions around stator 40 as an attachment structure. Similarly, each of the five rotors 42 includes a plurality of rotor lugs 46 at circumferentially spaced positions around rotor 42 as an attachment structure. In the embodiment of FIG. 1, pressure plate 30, end plate 32, and friction disks 38 are all annular structures made at least partially from a carbon composite material.

Torque flange 22 may be mounted to axle 12. Torque tube 24 is bolted to torque flange 22 such that reaction plate 34 is near an axial center of wheel 10. End plate 32 is connected to a surface of reaction plate 34 facing axially inward. Thus, end plate 32 is non-rotatable by virtue of its connection to torque tube 24. Stator splines 36 support pressure plate 30 so that pressure plate 30 is also non-rotatable. Stator splines 36 also support stators 40 via stator cores 48. Stator cores 48 engage stator splines 36 with gaps formed between stator lugs 44. Similarly, rotors 42 engage rotor splines 18 via rotor core 49 with gaps formed between rotor lugs 46. Thus, rotor cores 49 of rotors 42 are rotatable by virtue of their engagement with rotor splines 18 of wheel 10.

As shown in FIG. 1, rotors 42 with rotor cores 49 are arranged with end plate 32 on one end, pressure plate 30 on the other end, and stators 40 with stator cores 48 interleaved so that rotors 42 with rotor cores 49 are directly or indirectly adjacent to non-rotatable friction components. Pistons 26 are connected to torque flange 22 at circumferentially spaced positions around torque flange 22. Pistons 26 face axially toward wheel 10 and contact a side of pressure plate 30 opposite friction disks 38. Pistons 26 may be powered electrically, hydraulically, or pneumatically.

In various embodiments, in response to actuation of pistons 26, a force, towards reaction plate 34, is exerted on the rotatable friction disks 42 and the non-rotatable friction disks 40. The rotatable friction disks 42 and the non-rotatable friction disks 40 may thus be pressed together between pressure plate 30 and end plate 32.

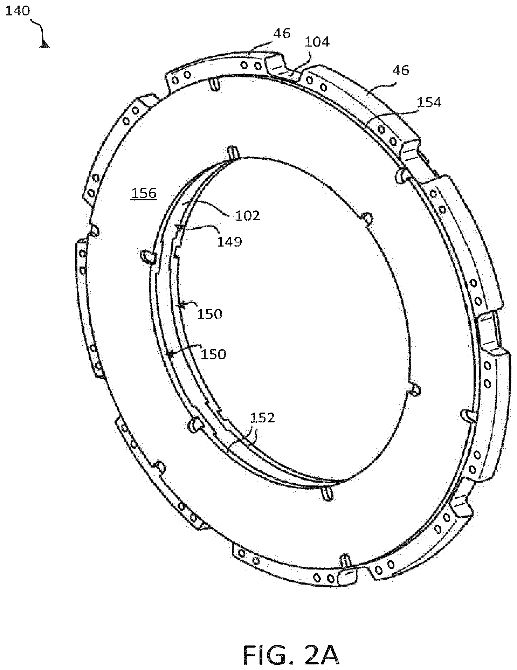

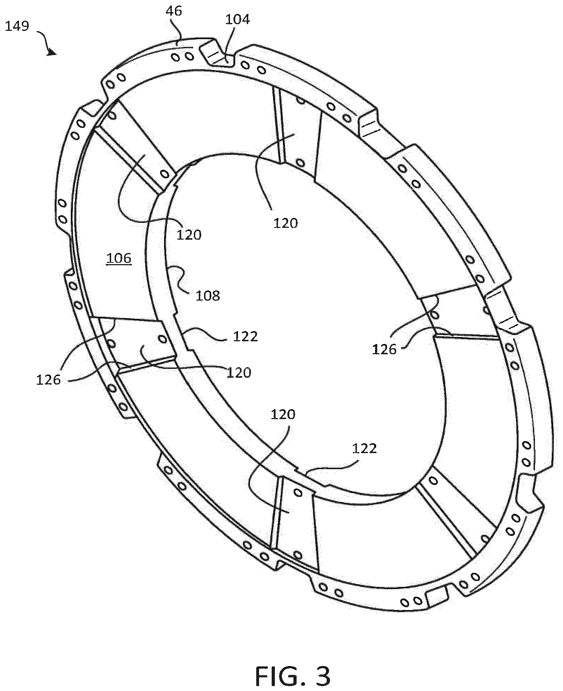

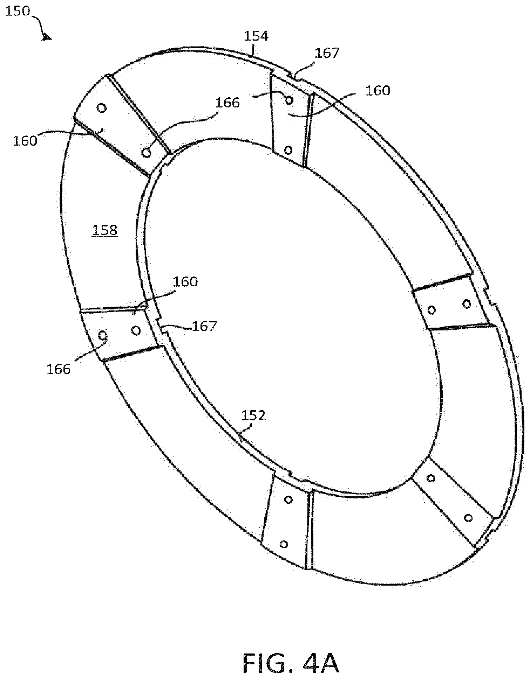

FIG. 2A illustrates a perspective view of a friction disk 140 having wear liners 150 disposed on opposing surfaces of the friction disk core 149, according to various embodiments. Friction disk 140 may be a stator or a rotor, such as stator 48 or rotor 49 described above with reference to FIG. 1. In various embodiments, wear liners 150 may be replaceable, such that after wear liners 150 have been worn below a suitable operational thickness, wear liners 150 may be removed from friction disk core 149 and replaced by new or remanufactured wear liners. In various embodiments, and with momentary reference to FIGS. 3 and 4A, wear liners 150 include ribs 160 (FIG. 4A) that are configured to be received into corresponding (e.g., complementary) channels 120 (FIG. 3) of the friction disk core 149. That is, the friction disk 140 in an installed state includes at least one wear liner 150 coupled to the friction disk core 149, with the at least one rib 160 of the wear liner 150 received within the at least one channel 120 of the friction disk core 149. Fasteners may extend through the ribs/channels, as described in greater detail below. Generally, the added material of the ribs 160 enables a greater volume of wear liners 150 to be consumed (i. e. used, worn) prior to replacement, as compared to wear liners which may be attached at a flange and/or which do not include ribs 160. In various embodiments, between 50% and 70% of a total material volume of unworn wear liners 150 may be consumed prior to wear liners 150 being replaced. In various embodiments, between 55% and 65% of the total material volume of unworn wear liners 150 may be consumed prior to wear liners 150 being replaced.

Returning to reference FIG. 2A, friction disk core 149 and wear liners 150 may comprise different materials. For example, in various embodiments, friction disk core 149 may comprise a first material (e.g., steel) and wear liners 150 may comprise a second material such as a carbon composite material. In various embodiments, friction disk core 149 and wear liners 150 may comprise the same material, such as a carbon composite material. In various embodiments, the material of friction disk core 149 may be selected for its structural properties, thermal conductivity, heat capacity, and/or oxidation resistance properties. For example, friction disk core 149 may comprise silicon carbide or titanium. In various embodiments, a material of wear liners 150 may be selected for its wear resistance and/or frictional properties. Thus, friction disk 140 may contain the structural advantages of friction disk core 149 and the frictional advantages of wear liners 150.

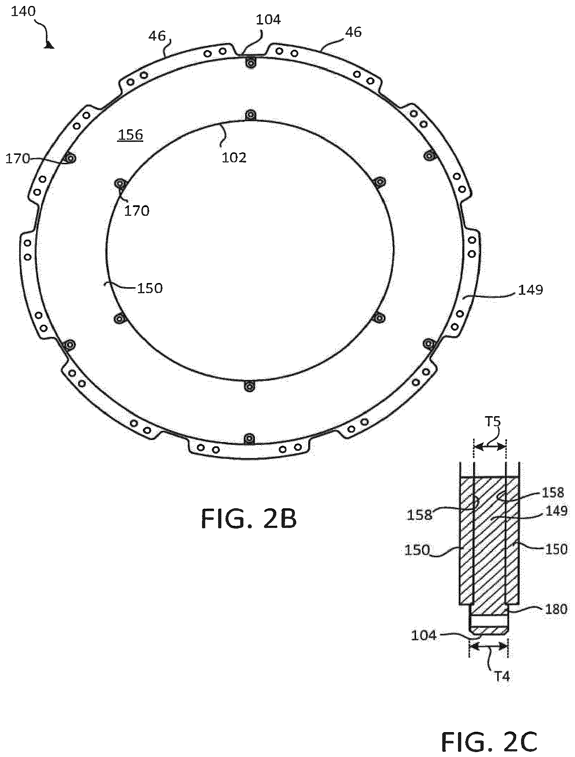

With reference to FIGS. 2A and 2B, friction disk core 149 may comprise a rotor spine and rotor lugs 46. Friction disk core 149 may engage rotor splines 18 (FIG. 1) in rotor gaps formed between rotor lugs 46. Thus, friction disk 140 may be rotatable by virtue of the engagement between rotor lugs 46 of friction disk core 149 and rotor splines 18 of wheel 10 (FIG. 1). Friction disk core 149 may comprise an inner circumferential surface 102 and an outer circumferential surface 104 radially outward of inner circumferential surface 102. Rotor lugs 46 may be extend from outer circumferential surface 104. With momentary reference to FIG. 3, friction disk core 149 further comprises a first surface 106 and a second surface 108 opposite first surface 106. First surface 106 and second surface 108 may extend along rotor spine 110 between inner circumferential surface 102 and outer circumferential surface 104.

In various embodiments, and with reference to FIG. 2C, Friction disk core 149 may comprise a thickness T5 along the contact area with non-wear surface 158 of wear liners 150. Friction disk core 149 may comprise a thickness T4 at outer circumferential surface 104 and rotor lugs 46. In various embodiments, thickness T4 may be greater than thickness T5. Stated another way, a portion 180 of friction disk core 149 that is radially outward of wear liners 150 and proximate to outer circumferential surface 104 and rotor lugs 46 may comprise a thickness T4 that is greater than the thickness T5 of a radially inward portion of friction disk core 149 that is in contact with wear liners 150. In various embodiments, thickness T5 of friction disk core 149 may be between 0.30 inches and 1.0 inches (i.e., between 0.76 cm and 2.54 cm). In various embodiments, thickness T5 of friction disk core 149 may be between 0.40 inches and 0.75 inches (i.e., between 1.02 cm and 1.91 cm). In various embodiments, thickness T5 of friction disk core 149 may be between 0.50 inches and 0.60 inches (i.e., between 1.27 cm and 1.52 cm).

FIG. 3 illustrates a perspective view of friction disk core 149 having a plurality of channels 120 for receiving a corresponding plurality of ribs 160 (FIG. 4A) of wear liner 150, according to various embodiments. That is, a plurality of first channels 120 may be formed in, and defined by, first surface 106 of the friction disk core 149. A plurality of second channels 122 may be formed in, and defined by, second surface 108 of the friction disk core 149. In various embodiments, the channels 120, 122 are recesses or depressions formed in the surface of the friction disk core 149 that is configured to face/engage the non-wear surface of the wear liners. In various embodiments, the channels 120, 122 are circumferentially distributed and are configured to be aligned with corresponding/complementary ribs 160 of the wear liners 150. This engagement between ribs 160 and channels 120 may facilitate torque transfer between the friction disk core 149 and the wear liners 150.

Each channel 120, 122 may be formed partially through friction disk core 149 such that a portion of friction disk core 149 remains between a bottom, or axially inward, surface of the channels 120, 122. Stated differently, a depth of first channels 120 and a depth of second channels 122 may be selected such that a portion of friction disk core 149 remains between axially aligned first channels 120 and second channels 122. In various embodiments, the circumferential positions of the first channels 120 are aligned with the circumferential positions of the second channels 122. In various embodiments, the depth of the first channels 120 may be about equal to the depth of second channels 122.

With continued reference to FIG. 3, first channels 120 and second channels 122 may extend radially. That is, sidewalls 126 of the channels 120, 122 may extend along or may be parallel to radii of the friction disk core 149. Accordingly, first channels 120 and second channels 122 may have a generally tapering or converging shape along a radially inward direction. The sidewalls of the channels 120, 122 may extend substantially axially, and thus may be substantially perpendicular to the first and second surfaces 106, 108 of the friction disk core 149. In various embodiments, sidewalls 126 of first channels 120 and second channels 122 may be sloped. For example, sidewalls 126 may be formed at angle between 91° and 155° relative to the first and second surfaces 106, 108 of the friction disk core 149.

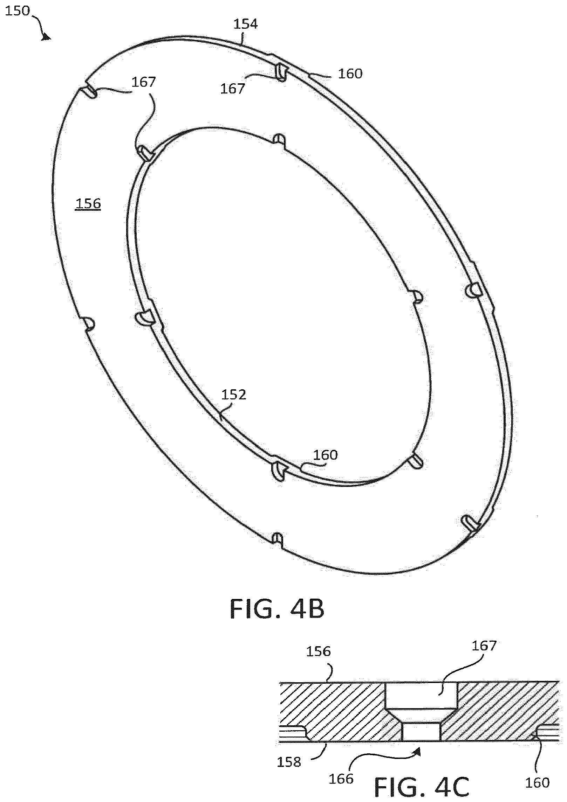

In various embodiments, and with reference to FIGS. 4A and 4B, the ribs 160 of wear liners 150 are shown. The wear liners 150 may comprise an inner circumferential surface 152 and an outer circumferential surface 154 radially outward of inner circumferential surface 152. Wear liners 150 may further include a wear surface 156 (FIG. 4B) and a non-wear surface 158 (FIG. 4A) opposite wear surface 156. Wear surface 156 may be substantially planar, or flat, and may extend from inner circumferential surface 152 to outer circumferential surface 154. Non-wear surface 158 may extend from inner circumferential surface 152 to outer circumferential surface 154 and may be oriented toward friction disk core 149.

Non-wear surface 158 may include a plurality of ribs 160, also referred to herein as torque ribs. Torque ribs 160 (also referred to as protrusions) may extend (i.e., protrude) from non-wear surface 158 in an axial direction toward friction disk core 149. Rib 160 may be integrally formed as part of the wear liner 150. The ribs 160 may extend generally radially, and thus sidewalls of the ribs 160 may extend along or be parallel with radii of the wear liner. That is, a circumferential dimension of the ribs 160 may taper or converge along a radially inward direction (e.g., from the outer circumferential surface 154 to the inner circumferential surface 152). Further, sidewalls of ribs 160 may complement the sidewalls 126 of channels 120 in terms of their orientation/shape. The ribs 160 may be circumferentially distributed around the wear liner 150. In various embodiments, the number, size, and distribution of ribs 160 may be selected according to the specifics of a given implementation in order to improve torque transfer and/or minimize vibrations. Further, the ribs 160 may impart additional structural integrity/rigidity to the wear liners, thus reinforcing and otherwise providing mechanical stiffness to the wear liners 150.

In various embodiments, and with reference to FIGS. 4A, 4B, and 4C, openings 166 may be formed through the one or more ribs 160. Openings 166 are pass-through holes or pass-through apertures that extend completely through wear liner 150 from wear surface 156 to non-wear surface 158. The openings 166 are configured to receive a fastener 170 (FIG. 2B), such as a rivet, bolt, pin, screw, or other suitable securement mechanism. Openings 166 may also include a counterbore 167 defined in the wear surface 156. In various embodiments, the diameter of opening 166 proximate wear surface 156 (e.g., the counterbore 167) may be greater than the diameter of the opening 166 proximate non-wear surface 158 of the wear liner 150. Because of the added material forming the rib 160, the wear liner 150 has sufficient space to form counterbore 167. Further, the counterbore 167 provides a shoulder against which a head of a fastener may be seated, and allows for the head of the fastener to be recessed relative to the wear surface 156. That is, locating openings 166 for the fasteners 170 (FIG. 2B) through the ribs 160 may allow the heads of fasteners 170 to be located/depressed a greater distance from wear surface 156. In this regard, the heads of fasteners 170 may remain recessed with respect to wear surface 156 of wear liners 150 for a greater period of time, thus enabling an increased volume of material of wear liner 150 to be consumed before wear liner replacement is warranted.

In various embodiments, and with reference to FIGS. 2A and 2B, an assembled friction disk 140, including wear liners 150 coupled to friction disk core 149, includes fasteners 170 that extend between opposing wear liners 150 and may couple wear liners 150 to friction disk core 149. Wear surface 156 of wear liners 150 may be oriented away from friction disk core 149. Outer circumferential surface 154 of wear liners 150 may disposed radially inward from outer circumferential surface 104 and rotor lugs 46 of friction disk core 149.

In various embodiments, each wear liner 150 may have an identical or substantially similar configuration. In various embodiments, while friction disk core 149 is shown and described as a rotor, a similar/corresponding configuration of wear liners with ribs may be implemented for a stator. In such embodiments, wear liners 150 may be interchangeable between rotors and stators (e.g. rotor 49 and stator 48 of FIG. 1) because the coupling of the wear liners is independent of rotor lugs 46 and stator lugs. Accordingly, the wear liners 150 may be compatible with both rotors and stators, and thus the manufacturing process and inventory system for friction disks may be simplified, thus resulting in potentially higher manufacturing output and/or reduced assembly time.

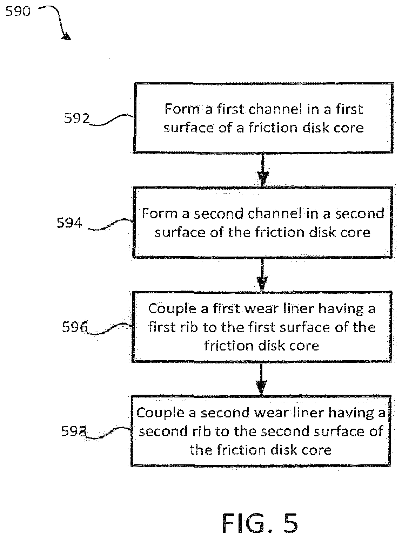

In various embodiments, and with reference to FIG. 5, a schematic flow chart diagram of a method 590 of making a friction disk is provided. The method 590 may include forming a first channel in a first surface of a friction disk core at step 592 and forming a second channel in a second surface of a friction disk core at step 594. The method 590 may further include coupling a first wear liner having a first rib to the first surface of the friction disk core at step 596 and coupling a second wear liner having a second rib to the second surface of the friction disk core at step 598. In various embodiments, steps 596 and 598 include aligning corresponding ribs with corresponding channels and inserting the ribs within the channels. Further, steps 596 and 598 may include disposing a fastener through the first rib, the first channel, the second channel, and the second rib to attach both wear liners to the core.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it may be within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A friction disk (140) comprising:
a friction disk core (149) comprising a first surface, wherein the friction disk core defines a first channel extending radially across the first surface; and
a first wear liner (150) coupled to the first surface of the friction disk core, the first wear liner comprising a first wear surface and a first non-wear surface, the first wear liner comprising a first rib protruding from and extending radially across the first non-wear surface of the first wear liner, wherein, in an installed state, the first rib is received within the first channel.

2. The friction disk of claim 1, further comprising a second wear liner, wherein:
the friction disk core further comprises a second surface opposite the first surface;
a second channel extends radially across the second surface of the friction disk core;
the second wear liner is coupled to the second surface of the friction disk core;
the second wear liner comprises a second wear surface and a second non-wear surface;
the second wear liner comprises a second rib protruding from and extending radially across the second non-wear surface of the second wear liner; and
in the installed state, the second rib is received within the second channel.

3. The friction disk of claim 2, further comprising a fastener extending from the first wear liner to the second wear liner through the first rib, the first channel, the second channel, and the second rib, wherein a first head of the fastener is recessed with respect to the first wear surface of the first wear liner and a second head of the fastener opposite the first head is recessed with respect to the second wear surface of the second wear liner.

4. The friction disk of any preceding claim, wherein sidewalls of the first rib are substantially perpendicular to the first non-wear surface, and preferably wherein the sidewalls of the first rib extend radially such that a circumferential dimension of the first rib decreases from radially outward to radially inward.

5. The friction disk of any preceding claim, wherein the friction disk core comprises a first material, and the first wear liner comprises a second material different from the first material.

6. The friction disk of any preceding claim, wherein the friction disk core comprises a rotor core.

7. The friction disk of any of claims 1-5, wherein the friction disk core comprises a stator core.

8. A multi-disk brake system comprising:
a first friction disk comprising:
a first friction disk core comprising a first surface, wherein the first friction disk core defines a plurality of first channels extending radially across the first surface; and
a first wear liner coupled to the first surface of the first friction disk core, the first wear liner comprising a first wear surface and a first non-wear surface, the first wear liner comprising a plurality of first ribs protruding from and extending radially across the first non-wear surface of the first wear liner, wherein in an installed state the plurality of first ribs are respectively received within the plurality of first channels; and
a second friction disk comprising:
a second friction disk core comprising a second surface, wherein the second friction disk core defines a plurality of second channels extending radially across the second surface; and
a second wear liner coupled to the second surface of the second friction disk core, the second wear liner comprising a second wear surface and a second non-wear surface, the second wear liner comprising a plurality of second ribs protruding from and extending radially across the second non-wear surface of the second wear liner, wherein, in the installed state, the plurality of second ribs are respectively received within the plurality of second channels.

9. The multi-disk brake system of claim 8, further including a first fastener coupling the first wear liner to the first friction disk core, wherein a first head of the first fastener is recessed with respect to the first wear surface of the first wear liner.

10. The multi-disk brake system of claim 9, wherein the first fastener extends through a first respective rib of the plurality of first ribs and a first respective channel of the plurality of first channels.

11. The multi-disk brake system of any of claims 8-10, wherein the plurality of first ribs and the plurality of first channels are circumferentially distributed around the first non-wear surface

12. The multi-disk brake system of any of claims 8-11, wherein the first friction disk core further comprises a first portion radially outward from an outer circumferential surface of the first wear liner, and preferably wherein the second friction disk core further comprises a second portion radially inward from an inner circumferential surface of the second wear liner, and more preferably wherein the first friction disk comprises a rotor and the second friction disk comprises a stator, and wherein the first wear liner and the second wear liner can be interchanged between the first friction disk core and the second friction disk core.

13. The multi-disk brake system of any of claims 8-12, wherein a usable material volume of the first wear liner is between 50% and 70% of a total material volume of the first wear liner in an unworn state.

14. A method of making a friction disk, comprising:
forming a first channel in a first surface of a friction disk core; and
coupling a first wear liner to the friction disk core, the first wear liner comprising a first rib protruding from a first non-wear surface of the first wear liner, wherein coupling the first wear liner to the friction disk core comprises aligning the first rib with the first channel and inserting the first rib within the first channel.

15. The method of claim 14, further comprising:
forming a second channel in a second surface of the friction disk core opposite the first surface of the friction disk core; and
coupling a second wear liner to the friction disk core, the second wear liner comprising a second rib protruding from a second non-wear surface of the second wear liner, wherein coupling the second wear liner to the friction disk core comprises aligning the second rib with the second channel and inserting the second rib within the second channel, and preferably wherein coupling the first wear liner to the friction disk core and coupling the second wear liner to the friction disk core comprises disposing a fastener through the first rib, the first channel, the second channel, and the second rib, and more preferably wherein a first head of the fastener is recessed with respect to a first wear surface of the first wear liner, and wherein a second head of the fastener opposite the first head of the fastener is recessed with respect to a second wear surface of the second wear liner.
